# EUROPÄISCHE PATENTSCHRIFT

(11) **EP 2 817 455 B1**
(45) Veröffentlichungstag und Bekanntmachung des Hinweises auf die Patenterteilung: **27.12.2017**
(21) Anmeldenummer: 13709313.4
(22) Anmeldetag: 22.02.2013
(51) Int. Cl.: E01F 7/04, A01K 61/00, B21F 27/04

(54) **NETZ, INSBESONDERE FÜR DEN SCHUTZ-, SICHERHEITS-, GEWÄSSERZUCHT- ODER ARCHITEKTURBEREICH, SOWIE EINE VORRICHTUNG ZUR HERSTELLUNG DES NETZES**
NET, IN PARTICULAR FOR PROTECTION, SAFETY, WATER REARING OR ARCHITECTURAL PURPOSES, AND AN APPARATUS FOR PRODUCING THE NET
FILET, DESTINÉ EN PARTICULIER AUX DOMAINES DE LA PROTECTION, LA SÉCURITÉ, L'ÉLEVAGE EN MILIEU AQUATIQUE OU L'ARCHITECTURE, AINSI QUE DISPOSITIF DE FABRICATION DUDIT FILET

(30) Priorität: 24.02.2012 CH 248122012
(43) Veröffentlichungstag der Anmeldung: 31.12.2014
(73) Patentinhaber: Geobrugg AG, 8590 Romanshorn (CH)
(72) Erfinder: WARTMANN, Stephan, 8592 Uttwill (CH)
(74) Vertreter: Daub, Thomas
(86) Internationale Anmeldenummer: PCT/EP2013/000518
(87) Internationale Veröffentlichungsnummer: WO 2013/124070

(56) Entgegenhaltungen:
- WO-A1-99/43894
- WO-A1-2010/049089
- DE-A1- 2 327 005

## Beschreibung

Die Erfindung betrifft ein Netz, insbesondere für den Schutz-, Sicherheits-, Gewässerzucht- oder Architekturbereich nach dem Oberbegriff des Anspruches 1, sowie eine Vorrichtung zur Herstellung des Netzes.

Schutznetze dieser Art zeichnen sich dadurch aus, dass sie eine hohe Reissfestigkeit und eine gute Verformbarkeit aufweisen, und aufgrund dessen in erheblichem Mass belastbar sind. Ein solches Schutznetz ist in der WO 2010/049089 geoffenbart, bei dem es sich um ein hochfestes Geflecht aus ineinandergedrehten Drahtspiralen handelt, die zu dreidimensionalen Maschenreihen flachgedrückt sind. Diese Verfahrensweise ermöglicht eine kostengünstige Herstellung des Geflechts.
Der Erfindung liegt die Aufgabe zugrunde, unter Beibehaltung dieser Vorteile die Festigkeitswerte des Netzes mit einfachen konstruktiven Massnahmen zu verbessern und zudem eine einwandfreie Herstellung solcher Netze bzw. Geflechte zu ermöglichen.
Die Aufgabe wird erfindungsgemäss nach den Merkmalen des Anspruchs 1 bzw. des auf die Vorrichtung bezogenen Anspruches 10 gelöst. Erfindungsgemäss sind diese jeweils knickförmig ausgebildeten Krümmungen zwischen den länglichen Schenkeln derart erzeugt, dass die jeweils benachbarten Schenkel gegeneinander quer zu ihrer Längserstreckung bis zum Erreichen der ebenen Flächenform plus einen zusätzlichen Winkel gedrückt sind.
Bei der erfindungsgemässen Vorrichtung sind die bei Erreichen der ebenen Flachform entstehenden länglichen Schenkel annähernd über ihre gesamte Länge durch Stempel geführt und die Längselemente stehen jeweils nur bei der Krümmung aus den Stempeln vor.
Die erfindungsgemässen Knickungen in den Schenkelbereichen erhöhen die Flexibilität des Netzes und lockern gewissermassen die Geometrie des Netzes auf, was in der Natur zu einem optisch vorteilhaften Tarneffekt führt. Da diese erfindungsgemässen Netze vor allem in der Natur gegen Naturgefahren verwendet werden, ist dies gegenüber herkömmlichen Netzen ein Vorteil.

Die Knickungen der Netze führen zudem zu einer aufgelockerten, dreidimensionalen Struktur, was für architektonische Anwendungen neuartige optische Wirkungen erzielt, was beispielsweise bei grossflächigen Fasadenabdeckungen verwendet werden kann.

Zwecks einer mehrheitlich spiegelsymmetrischen Ausbildung des Geflechts sieht die Erfindung vor, dass die Längselemente mit alternierend in gegenläufige Richtungen quer zur Netzfläche gebogenen Knickungen versehen sind. Diese Massnahme ist insbesondere sinnvoll, wenn die Längselemente rautenförmige Maschen bilden, deren Schenkel gegenläufig gebogene Knickungen aufweisen.

Im Hinblick auf den Einsatz des Schutznetzes unter umweltmässig widrigen Bedingungen sieht die Erfindung auch vor, dass die Längselemente aus Drähten, Seilen oder Litzen aus korrosionsbeständigem, rostfreiem oder korrosionsschutzbeschichtetem Stahl hergestellt sind. Zweckmässigerweise sind die Drähte, Seile oder Litzen aus hochfestem Stahl mit einer Festigkeit von 1000 N/mm² bis 3200 N/mm² hergestellt.

Es ist zwecks einer gelenkigen Endverbindung der Längselemente vorteilhaft, wenn die Drähte, Seile oder Litzen endseitig zu Schlaufen geknotet sind, durch welche sie paarweise miteinander mit Drahtklemmen, Drahtschlingen oder dergleichen Verbindungselementen verbindbar sind.

Die Erfindung ist nachfolgend anhand von Ausführungsbeispielen unter Bezugnahme auf die Zeichnung näher erläutert. Es zeigen:
- Fig. 1: ein erfindungsgemässes Netz, vereinfacht in der Vorderansicht dargestellt,
- Fig. 2: ein perspektivisch veranschaulichtes Längselement des Schutznetzes nach Fig. 1,
- Fig. 3: und Fig. 4 je eine Ausführungsformen des Längselementes aus Fig. 2, in Richtung des Pfeils I in Fig. 1 dargestellt,
- Fig. 5: eine perspektivische schematische Ansicht von zwei Stempeln einer erfindungsgemässen Vorrichtung für die Herstellung des Netzes;
- Fig. 6: bis Fig. 8 jeweils schematisch zwei Stempel in schematischer Ansicht, die in drei verschiedenen gegeneinander verstellten Positionen dargestellt sind und dabei einen wendelförmig gebogenen Draht flachdrücken.

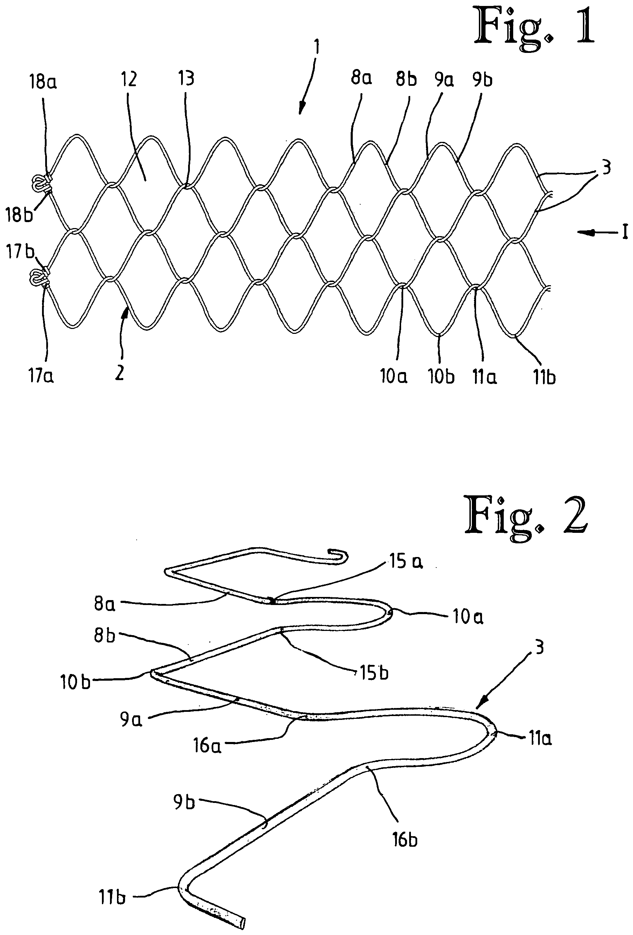

In Fig. 1 ist ein Teil eines Netzes 1 dargestellt, das insbesondere als Schutznetz gegen Steinschlag, Erdrutsche, Lawinen, Böschungsinstabilitäten und ähnliche Naturgefahren einsetzbar ist. Zudem kann es im Sicherheitsbereich oder in der Architektur zu ästhetischen Zwecken verwendet werden. Beispielsweise werden diese als Zaunsysteme, Absperrund Absturzsicherungen, Splitterschutz, Ein- und Ausbruchschutz, Durchfahrtssperren gegen Fahrzeuge oder Schiffe sowie für weitere sicherheitsrelevanten Netzlösungen verwendet. Ein solches Netz eignet sich aber auch als Schutznetz bei Körben oder Umhüllungen für den Fisch-, Muschel- oder Weichtierzucht in Gewässern.

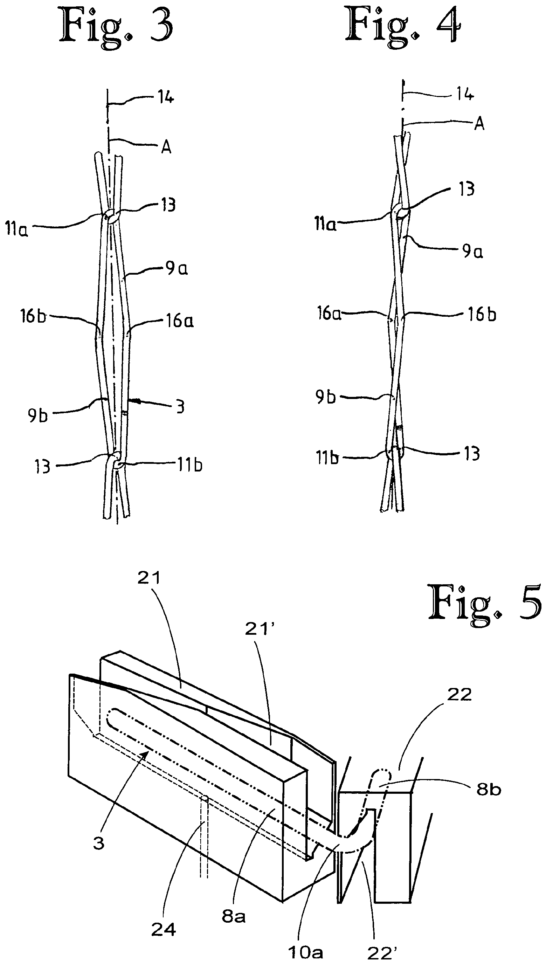

Das Netz 1 besteht aus einem Maschendrahtgeflecht 2, das aus Längselementen 3 in Gestalt von wendelförmig gebogenen Stahldrähten 4, 5, 6, 7 gemäss Fig. 5 hergestellt ist. Die spiralförmig gebogenen Drähte 4, 5, 6, 7 werden paarweise ineinandergedreht, miteinander zusammengeflochten und dabei derart flachgedrückt, dass sie am Ende des Umformungsprozesses die in Fig. 2 gezeigte Gestalt mit regelmässig aufeinanderfolgenden Schenkeln 8a, 8b; 9a, 9b und Krümmungen 10a, 10b; 11a, 11b erhalten. Dabei sind die gewundenen Längselemente 3 in den Schenkelbereichen 8a, 8b; 9a, 9b so zusammengedrückt, dass sie annähernd geradlinig sind.

Das so entstandene Maschendrahtgeflecht 2 weist rautenförmige Maschen 12 auf, deren Gelenkknoten 13 die in den Fig. 3 und Fig. 4 strichpunktiert eingezeichnete Netzfläche 14 mit einer annähernd ebenen Flächenform A definieren.

Die Drähte der Längselemente 3 sind an ihren Enden zu Schlaufen 17a, 17b; 18a, 18b gebogen oder geknotet, die es ermöglichen, die Drähte endseitig mittels paarweise durch die Schlaufen 17a, 17b bzw. 18a, 18b geführter Drahtklemmen bzw. Drahtschlingen oder ähnlicher endseitiger Elemente zu verbinden. Die geknoteten Drahtenden ermöglichen zudem eine kostengünstige Verbindung mit den benachbarten Netzabschnitten des Schutznetzes. Anstelle der Knoten sind selbstverständlich auch andere vergleichbare Endverbindungen für die Drahtenden der Längselemente verwendbar.

Erfindungsgemäss sind die gewundenen Längselemente 3 zu einem in der Netzfläche 14 annähernd ebenen Flächenform A umgeformt, wobei die Krümmungen 10a, 10b; 11a, 11b jeweils knickförmig erzeugt sind. Diese knickförmigen Krümmungen 10a, 10b; 11a, 11b sind so geformt, dass auf der Innenseite einer jeweiligen Krümmung 10a, 10b; 11a, 11b der Krümmungsradius sehr gering bzw. annähernd null ist.

Die Längselemente 3 sind ausserdem im Rahmen der Erfindung so ausgeformt, dass sie in der Netzfläche 14 annähernd eben sind und im Schenkelbereich mit je einer leichten Knickung 15a, 16b; 16a, 16b quer zur Netzfläche 14 versehen sind. Diese einfache Massnahme bewirkt, dass das Netz höhere Zug- und Reissfestigkeitswerte sowie eine deutlich höhere Verformbarkeit als ohne die Knickungen aufweist. Dadurch kann es bei einem Impact durch einen schweren Gegenstand mehr kinetische Energie absorbieren.

Die Knickungen 15a, 15b; 16a, 16b sind etwa in der Mitte der Schenkel 8a, 8b; 9a, 9b alternierend in gegenläufige Richtungen quer zur Netzfläche 14 angeordnet. Sie haben eine Höhe von höchstens wenigen Millimetern, die zweckmässigerweise abhängig vom Durchmesser der Längselemente 3 festgelegt wird.

Es ist auch im Rahmen der Erfindung möglich, mehrere gleich und/oder gegenläufig verlaufende Knickungen pro Schenkel vorzusehen. Bereits sehr geringfügige Knickungen ermöglichen je nach Anwendungsfall vorteilhafte elastische bzw. plastische Federungsfunktionen.

Wie aus Fig. 3 und Fig. 4 ersichtlich, ist es auch im Rahmen der Erfindung möglich, die Geometrie des Drahtgeflechts 2 zu variieren, solange seine Längselemente 2 in der Netzfläche 14 annähernd eben sind und ihre Schenkel 8a, 8b; 9a, 9b mit leichten Knickungen quer zur Netzfläche 14 versehen sind. Je nach Einsatzbedingungen kann anstelle des Drahtgeflechts auch ein Geflecht aus Seilen oder Litzen eingesetzt werden.

Die gelenkigen Verbindungen 13 zwischen den Drähten 3 ermöglichen das Zusammenrollen oder Zusammenlegen des Geflechts. Das ist vorteilhaft für den Transport und die Lagerung des Netzes.

Fig. 5 bis Fig. 8 zeigen schematisch zwei von reihenweise angeordneten Stempeln 21, 22 einer erfindungsgemässen Vorrichtung. Diese Stempel 21, 22 sind jeweils an der vorderen Stirnseite mit einer den Draht 3 aufnehmenden Führungsnut 21', 22' versehen und derart zueinander angeordnet, dass die Führungsnuten 21', 22' abwechslungsweise gegeneinander gerichtet sind und entsprechend dem Steigungswinkel der Schenkel 8a, 8b; 9a, 9b verlaufen. Diese Stempel 21, 22 sind dabei quer zur Längserstreckung der wendelförmig gebogenen Längselementen 3 in einem bestimmten Abstand zueinander über antreibbare Gestänge hin und her verstellbar.

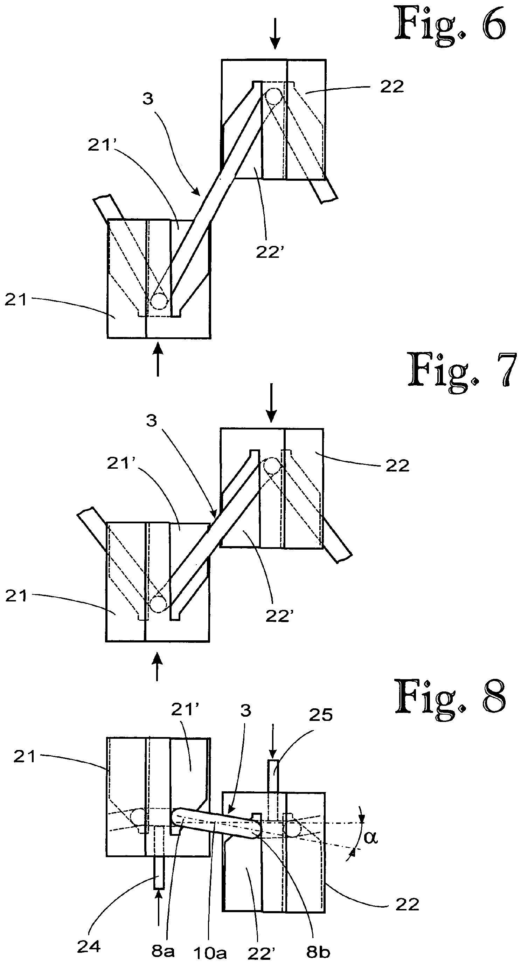

In Fig.6 ist die Ausgangsposition zweier von den reihenweise angeordneten Stempeln 21, 22 veranschaulicht, welche entsprechend der Steigungshöhe der einzelnen Drahtwendel beabstandet sind. Der wendelförmig gebogene Draht 3 wird dabei entlang seiner Längsachse in die Führungsnuten 21', 22' ähnlich einem Einschrauben eingedreht und zudem gleichzeitig in einen benachbarten bereits flachgedrückten Draht eingefädelt, was aber nicht näher gezeigt ist. Auf diese Weise kann das Netz kontinuierlich hergestellt werden.

Fig. 7 zeigt die beiden Stempel 21, 22 in einer gegeneinander verschobenen und den Draht 3 zusammendrückenden Position.

Aus der Endposition der Stempel 21, 22 gemäss Fig. 8 geht hervor, wie die jeweils knickförmig ausgebildeten Krümmungen 10a der Längselemente zwischen den länglichen Schenkeln 8a, 8b erzeugt sind. Die bei Erreichen der ebenen Flachform entstehenden länglichen Schenkel 8a, 8b sind durch die Stempel 21, 22 annähernd über ihre gesamte Länge geführt, wie dies auch aus Fig. 5 zu entnehmen ist. Dabei ragen die Längselemente 3 jeweils nur bei der Krümmung 10a, 10b aus den Stempeln 21, 22 heraus.

Die jeweils benachbarten Schenkel 8a, 8b werden gegeneinander quer zu ihrer Längserstreckung bis zum Erreichen der ebenen Flächenform A plus einen zusätzlichen Winkel α zusammengedrückt. Mit diesem Überdehnen der Schenkel wird die jeweilige Knickform der Krümmungen zusätzlich begünstigt, da damit gewissermassen eine Art Festigkeitserhöhung bewirkt wird, wobei dieser Winkel α, der vorzugsweise zwischen 10° und 30° beträgt, beim Zurückziehen der Stempel und dem Lösen des Längselementes durch die Zurückfederung der Schenkel kleiner wird.

Für die Erzeugung der Knickungen 15a, 15b; 16a, 16b bei den Längselementen 3 sind die Stempel 21, 22 mit ebenfalls quer zur Längserstreckung der Längselemente 3 hin und her bewegbaren Stiften 24, 25 ausgerüstet, die vorzugsweise in dieser in Fig. 8 gezeigten Endposition der Stempel 21, 22 senkrecht gegen die Schenkel 8a, 8b bewegt werden, dermassen, dass diese bleibenden Knickungen entstehen.

Bei Netzen aus Drahtgeflecht werden vorzugsweise hochfeste Drähte mit Festigkeiten zwischen 1000 N/mm² und 3200 N/mm² verwendet, die einer besonders hohen Belastung standhalten.

Je nach Verwendungszweck und gewünschtem Verformungsverhalten sind aber auch Anwendungen im Nennfestigkeitsbereich zwischen 350 N/mm² bis 1000 N/mm² sinnvoll.

Mit Rücksicht auf die Einsatzbedingungen im Freien werden rostfreie, korrosionsbeständige oder mit einem Korrosionsschutz beschichtete Stähle bevorzugt. Bei der Verwendung solcher Netze als Körbe oder Umhüllungen bei der Fisch- oder Muschelzucht sind sie mit einer Antifouling-Schicht versehen, welche beispielsweise Kupfer enthalten kann. Bei Verwendung von Seilen oder Litzen ist es nicht notwendig, dass sie ausschliesslich aus hochfesten Drähten mit den obengenannten Nennfestigkeitswerten bestehen müssen.

Mit dem erfindungsgemässen Netz ist zudem das Herstellen von runden, zylindrisch geschlossenen Netzelementen ermöglicht, welche beispielsweise über Muschelzuchtelemente gestülpt werden können. Auch lassen sich würfelartige Körper aus einzelnen Netzelementen herstellen.

Die entsprechenden Drahtdurchmesser für das erfindungsgemässe Netz sind vorzugsweise im Bereich zwischen 0.5 mm bis 5.0 mm. Anstelle von Einzeldrähten können auch Litzen (z.B. bestehend aus 2 bis 7 Drähten) verwendet werden.

Die Erfindung ist mit dem obigen Ausführungsbeispiel ausreichend dargetan. Sie könnte aber noch durch andere Varianten erläutert sein. So könnten beispielsweise pro Schenkelelement je nach Anwendung auch mehrere oder theoretisch keine Knickungen vorgesehen sein. Hierbei ist vorzugsweise eine ungerade Anzahl Knickungen vorteilhaft. Anstelle der zuvor erwähnten Knickung führen auch sinngemäss ähnliche Umformungen zu erfindungsgemässen Verbesserungen. Solche Umformungen können knickähnlich leicht langgezogen und/oder ovalförmig ausgebildet sein.

Je nach Einsatzzweck des Netzes können die einzelnen Längselemente im Prinzip auch mit unterschiedlichen Festigkeiten ausgebildet sein.

## Patentansprüche

1. Netz, insbesondere für den Schutz-, Sicherheits-, Gewässerzuchts- oder Architekturbereich, welches aus einzelnen wendelförmig gebogenen Längselementen (3), wie Drähte, zu einem Geflecht (1) zusammengeflochten ist, wobei einzelne zu einer Zylinder- bzw. Schraubenform gebogenen Längselemente (3) mit benachbarten ineinandergedreht und derart zusammengedrückt sind, dass das Geflecht (1) eine annähernd ebene Flächenform (A) und die Längselemente (3) dabei jeweils annähernd geradlinige Schenkel (8a, 8b; 9a, 9b) und dazwischen Krümmungen (10a, 10b; 11a, 11b) bilden, **dadurch gekennzeichnet, dass**
die Krümmungen (10a, 10b; 11a, 11b) zwischen den länglichen Schenkeln (8a, 8b; 9a, 9b) jeweils knickförmig ausgebildet sind, die derart erzeugt sind, dass die jeweils benachbarten Schenkel (8a, 8b; 9a, 9b) gegeneinander quer zu ihrer Längserstreckung bis zum Erreichen der ebenen Flächenform (A) plus einen zusätzlichen Winkel (α) zusammengedrückt sind.

2. Netz nach Anspruch 1, **dadurch gekennzeichnet, dass**
die gewundenen Längselemente (3) in den Schenkelbereichen (8a, 8b; 9a, 9b) zwischen den Krümmungen (10a, 10b; 11a, 11b) mit jeweils wenigstens einer leichten Knickung (15a, 15b; 16a, 16b) geformt sind.

3. Netz nach Anspruch 2, **dadurch gekennzeichnet, dass**
die Knickungen (15a, 15b; 16a, 16b) sich jeweils quer zur Netzfläche (14) erstrecken und annähernd in der Mitte des Schenkels (8a, 8b; 9a bzw. 9b) angeordnet sind.

4. Netz nach Anspruch 2 oder 3, **dadurch gekennzeichnet, dass**
die sich jeweils quer zur Netzfläche (14) erstreckenden Knickungen (15a, 15b; 16a, 16b) jeweils eine Höhe von maximal wenigen Millimetern aufweisen, die vorzugsweise abhängig vom Durchmesser der Längselemente (3) bemessen ist.

5. Netz nach einem der vorhergehenden Ansprüche 1 bis 4, **dadurch gekennzeichnet, dass**
die Längselemente (3) alternierend in gegenläufige Richtungen quer zur Netzfläche (14) gebogene Knickungen (15a, 15b; 16a, 16b) aufweisen.

6. Netz nach Anspruch 5, **dadurch gekennzeichnet, dass**
die Längselemente (3) rautenförmige Maschen (12) bilden, deren Schenkel (8a, 8b; 9a, 9b) mit gegenläufig gebogenen Knickungen (15a, 15b; 16a, 16b) versehen sind.

7. Netz nach einem der vorhergehenden Ansprüche 1 bis 6, **dadurch gekennzeichnet, dass**
die Längselemente (3) aus Drähten, Seilen oder Litzen aus korrosionsbeständigem, rostfreiem oder korrosionsschutzbeschichtetem Stahl hergestellt sind.

8. Netz nach einem der vorhergehenden Ansprüche 1 bis 7, **dadurch gekennzeichnet, dass**
die Drähte, Seile oder Litzen aus hochfestem Stahl, vorzugsweise mit einer Nennfestigkeit von 1000 N/mm² bis 3200 N/mm² hergestellt sind.

9. Netz nach einem der vorhergehenden Ansprüche 1 bis 8, **dadurch gekennzeichnet, dass**
die Drähten, Seile oder Litzen endseitig zu Schlaufen (17a, 17b; 18a, 18b) geknotet sind, durch welche sie miteinander paarweise an ihren Enden mit Drahtklemmen bzw. Drahtschlingen oder dergleichen Verbindungselementen gelenkig verbindbar sind.

10. Vorrichtung zur Herstellung eines Netzes nach einem der vorhergehenden Ansprüche 1 bis 9, mit reihenweise angeordneten Stempeln (21, 22), die quer zur Längserstreckung der wendelförmig gebogenen Längselemente (3) gegeneinander verstellbar und jeweils an der vorderen Stirnseite mit einer das Längselement zentrierenden Führungsnut (21', 22') versehen sind, welche entsprechend dem Steigungswinkel der Schenkel (8a, 8b; 9a, 9b) verlaufen, wobei in der Ausgangsposition der Stempel ein wendelförmig gebogenes Längselement in diese Führungsnuten der Stempel eindrehbar oder einlegbar ist, indes das Längselement (3) in der Endposition der Stempel zusammengedrückt ist, wobei die jeweilige Knickform der Krümmungen (10a, 10b; 11a, 11b) erzeugt ist, indem die bei Erreichen der ebenen Flachform (A) entstehenden länglichen Schenkel (8a, 8b; 9a, 9b) annähernd über ihre gesamte Länge durch die Stempel (21, 22) geführt sind und die Längselemente (3) jeweils nur bei der Krümmung (10a, 10b; 11a, 11b) aus den Stempeln (21, 22) vorstehen, wobei die Schenkel (8a, 8b; 9a, 9b) bis zum Erreichen der ebenen Flächenform (A) plus einen zusätzlichen Winkel (α) bei der jeweiligen Krümmung (10a, 10b; 11a, 11b) zusammendrückbar sind.

## Claims

1. Netting, in particular for the areas of protection, safety, water rearing or architecture, which is woven from individual spirally-bent elongate elements (3), like wires, to form a braided structure (1), wherein individual elongate elements (3), which are bent into a cylinder shape or screw shape, are mutually twisted with neighbouring ones and are compressed in such a way that the braided structure (1) forms an approximately planar surface shape (A), with the elongate elements (3) each forming approximately straight-lined legs (8a, 8b; 9a, 9b) and curvatures (10a, 10b; 11a, 11b) in-between, **characterised in that**
the curvatures (10a, 10b; 11a, 11b) between the elongate legs (8a, 8b; 9a, 9b) are respectively embodied elbow-shaped and are generated by the respectively neighbouring legs (8a, 8b; 9a, 9b) being compressed against one another transversely to their longitudinal extension until arriving at the planar surface shape (A) plus an additional angle (α).

2. Netting according to claim 1, **characterised in that** the spiralled elongate elements (3) are each shaped with at least one slight elbow (15a, 15b; 16a, 16b) in the regions of the legs (8a, 8b; 9a, 9b) between the curvatures (10a, 10b; 11a, 11b).

3. Netting according to claim 2, **characterised in that** the elbows (15a, 15b; 16a, 16b) respectively extend transversely to the net surface (14) and are arranged approximately in the middle of the leg (8a, 8b; 9a, 9b).

4. Netting according to claim 2 or 3, **characterised in that** the elbows (15a, 15b; 16a, 16b) respectively extending transversely to the net surface (14) each have a height of maximally a few millimetres, which height is preferably dimensioned depending on a diameter of the elongate elements (3).

5. Netting according to one of the preceding claims 1 to 4, **characterised in that** the elongate elements (15a, 15b; 16a, 16b) comprise elbows (15a, 15b; 16a, 16b) alternatingly bent in opposite directions transversely to the net surface (14).

6. Netting according to claim 5, **characterised in that** the elongate elements (3) form rhombus-shaped meshes (12), the legs (8a, 8b; 9a, 9b) of which are provided with elbows (15a, 15b; 16a, 16b) bent in opposite directions.

7. Netting according to one of the preceding claims 1 to 6, **characterised in that** the elongate elements (3) are implemented of wires, cords or braids which are made of corrosion-resistant steel, stainless steel or anticorrosive-coated steel.

8. Netting according to one of the preceding claims 1 to 7, **characterised in that** the wires, cords or braids are made of high-strength steel, preferably with a nominal strength of 1000 N/mm² to 3200 N/mm².

9. Netting according to one of the preceding claims 1 to 8, **characterised in that** the wires, cords or braids are knotted into loops (17a, 17b; 18a, 18b) at their ends, by which they are connectable at their ends in pairs in an articulate manner via wire clamps or wire loops or similar connecting elements.

10. Device for producing a netting according to one of the preceding claims 1 to 9, with holding means (21, 22) arranged in rows, which are adjustable with respect to one another transversely to the longitudinal extension of the spirally-bent elongate elements (3) and are each provided, on a respective front face, with a guiding groove (21', 22') which centres the longitudinal element, the guiding grooves (21', 22') running in correspondence to a gradient angle of the legs (8a, 8b; 9a, 9b) wherein, in a start position of the legs, a spirally-bent elongate element is rotatable or insertable into said guiding grooves of the holding means, the elongate element (3) being compressed in an end position of the holding means, wherein the respective elbow shape of the curvatures (10a, 10b; 11a, 11b) is generated by the elongate legs (8a, 8b; 9a, 9b), which result on achieving the planar flat shape (A), being guided through the holding means (21, 22) approximately over their entire length and by the elongate elements (3) respectively protruding out of the holding means (21, 22) only at the curvature (10a, 10b; 11a, 11b), wherein the legs (8a, 8b; 9a, 9b) are compressible at the respective curvature (10a, 10b; 11a, 11b) until achieving the planar surface shape (A) plus an additional angle (α).

## Revendications

1. Filet, notamment pour les domaines de la protection, de la sécurité, de l'élevage en milieu aquatique ou de l'architecture, lequel est tressé d'éléments individuels longitudinales (3) recourbés en spirale, par exemple des fils, pour former un treillis (1), selon lequel des éléments longitudinaux (3) individuels, lesquels sont recourbés pour implémenter une forme de cylindre ou de vis, sont torsadés l'un dans l'autre avec des éléments longitudinaux (3) voisins et sont comprimés de telle façon que le treillis (1) implémente une forme de superficie (A) à peu près planaire avec les éléments longitudinaux (3) chacun formant des côtés (8a, 8b ; 9a, 9b) à peu près rectilignes aussi que des courbures (10a, 10b ; 11a, 11b) entres les côtés (8a, 8b ; 9a, 9b), **caractérisé en ce que**
les courbures (10a, 10b ; 11a, 11b) entres les côtés (8a, 8b ; 9a, 9b) longitudinaux sont implémentés respectivement en forme de pli et sont générés de telle manière que chacun des côtés (8a, 8b ; 9a, 9b) voisins soit comprimé l'un contre l'autre transversalement à son extension longitudinale jusqu'à atteindre la forme de superficie planaire (A) plus un angle (α) additionnel.

2. Filet selon la revendication 1, **caractérisé en ce que**
les éléments longitudinaux (3) sinueux sont formés, dans les zones de côtés (8a, 8b ; 9a, 9b) entre les courbures (10a, 10b ; 11a, 11b), chacun avec au moins un petit pli (15a, 15b ; 16a, 16b).

3. Filet selon la revendication 2, **caractérisé en ce que**
les plis (15a, 15b ; 16a, 16b) s'étendent respectivement transversalement à la surface de filet (14) et sont disposés approximativement au centre du côté (8a, 8b ; 9a, 9b).

4. Filet selon la revendication 2 ou 3, **caractérisé en ce que**
chacun des plis (15a, 15b ; 16a, 16b) s'étendant respectivement transversalement à la surface de filet (14) comporte une hauteur d'au maximum quelques millimètres, laquelle est dimensionnée de préférence en dépendance à un diamètre des éléments longitudinaux (3).

5. Filet selon l'une quelconque des revendications précédentes 1 à 4, **caractérisé en ce que**
les éléments longitudinaux (3) comportent en alternance des plis (15a, 15b ; 16a, 16b) courbés en directions contraires transversalement à la surface de filet (14).

6. Filet selon l'une quelconque des revendications précédentes, **caractérisé en ce que**
les éléments longitudinaux (3) forment des mailles (12) en forme de parallélogramme, dont les côtés (8a, 8b ; 9a, 9b) sont dotés des plis (15a, 15b ; 16a, 16b) courbés en directions contraires.

7. Filet selon l'une quelconque des revendications précédentes 1 à 6, **caractérisé en ce que**
les éléments longitudinaux (3) sont fabriqués des fils, des câbles ou des torons d'acier résistant à corrosion, inoxydable, ou revêtu d'une protection anti-corrosion.

8. Filet selon l'une quelconque des revendications précédentes 1 à 7, **caractérisé en ce que**
les fils, câbles ou torons sont préférablement fabriqués en un acier à haute résistance avec une résistance nominale de 1000 N/mm² à 3200 N/mm².

9. Filet selon l'une quelconque des revendications précédentes 1 à 8, **caractérisé en ce que**
les fils, câbles ou torons sont noués pour former des boucles (17a, 17b ; 18a, 18b) à leurs extrémités, par le biais desquels ils sont connectables à leurs extrémités, de façon articulaire, en paires avec des pinces à fil ou des collets à fil ou des éléments de connexion similaires.

10. Dispositif pour fabriquer un filet selon l'une quelconque des revendications précédentes 1 à 9, avec des moyens de retenue (21, 22) agencés en rangées, lesquels sont mutuellement ajustables transversalement à l'extension longitudinale des éléments longitudinaux (3) recourbés en spirale, et chacun sont pourvus, à son face frontale, d'une rainure à guidage (21' 22') centrant l'élément longitudinal et s'étendant en correspondance à l'angle de pente des côtés (8a, 8b ; 9a, 9b), un élément longitudinal (3) étant vissable ou insérable dans lesdites rainures à guidage des moyens de retenue, l'élément longitudinal (3) étant comprimé dans la position finale des moyens de retenue,
la forme pliée des courbures (10a, 10b ; 11a, 11b) étant respectivement générée par le biais de les côtés longitudinaux (8a, 8b ; 9a, 9b), lesquels résultent en achevant la forme plat planaire (A), étant guidés sur toute leur longueur au travers des moyens de retenue (21, 22) et les éléments longitudinaux (3) respectivement projetant des moyens de retenue (21, 22) seulement à la courbure (10a, 10b ; 11a, 11b),
les côtés (8a, 8b ; 9a, 9b) étant compressibles, à la courbure (10a, 10b ; 11a, 11b) respective, jusqu'à achevant la forme de surface planaire (A) plus un angle additionnel (α).
